# FASCICULE DE BREVET EUROPEEN

(11) **EP 0 478 447 B1**
(45) Date de publication et mention de la délivrance du brevet: **07.12.1994**
(21) Numéro de dépôt: 91402547.3
(22) Date de dépôt: 25.09.1991
(51) Int. Cl.: G01N 21/53

(54) **Détecteur des impuretés contenues dans un fluide et circuit faisant application d'un tel détecteur**
Sensor für Verunreinigungen in einem Fluidum und seine Anwendung in einem Kreis
Sensor for impurities in a fluid and its use in a circuit

(30) Priorité: 26.09.1990 FR 9011843
(43) Date de publication de la demande: 01.04.1992
(73) Titulaire: SOCIETE NATIONALE D'ETUDE ET DE CONSTRUCTION DE MOTEURS D'AVIATION, "S.N.E.C.M.A.", F-75724 Paris Cédex 15 (FR)
(72) Inventeur: Fillion, Jean-Claude, F-75015 Paris (FR); Makowski, Pascal, F-77810 Thomery (FR); Thenaisie, Anne, F-77270 Villeparisis (FR)

(56) Documents cités:
- DE-A- 3 329 821
- FR-A- 2 123 948
- FR-A- 2 369 559
- PATENT ABSTRACTS OF JAPAN vol. 9, no. 72 (P-345)(1795) 2Avril 1985 & JP-A-59 204 743

## Description

Le contrôle de la qualité du fluide d'un circuit, de lubrification par exemple, est une opération primordiale pour maintenir en bon état les pièces fonctionnelles.

Il est pour ce faire nécessaire, de la manière la plus générale, de pouvoir vérifier la transparence du fluide pour en détecter les éventuelles impuretés. Selon l'état de la technique connue, les détecteurs utilisés comportent des aimants, qui attirent les impuretés métalliques, et des circuits électriques influencés par la présence desdites impuretés métalliques. Cette technique présente quelques inconvénients parmi lesquels notamment la complexité et le coût des circuits électriques mis en oeuvre. De tels détecteurs sont connus de FR-A- 2 564 897 et FR-A- 2 647 225.

L'invention propose un nouveau détecteur d'impuretés destiné à la détection des impuretés métalliques, détecteur en outre simple et efficace.

L'invention concerne donc un détecteur des impuretés éventuellement contenues dans un fluide contenu dans une enceinte, ladite enceinte comprenant une zone de détection desdites impuretés dans laquelle est disposée une tête de détection que comporte ledit détecteur, la zone de détection ayant deux premières parois disposées en regard l'une de l'autre, le détecteur d'impuretés ayant deux fibres optiques, une source lumineuse et un détecteur de lumière, une première extrémité de chacune desdites fibres optiques ayant un accès optique de l'intérieur de la zone de détection, les deux dites fibres optiques étant alignées dans la zone de leurs premières extrémités, qui sont supportées par lesdites premières parois, la deuxième extrémité d'une première desdites fibres optiques étant disposée en regard de la source lumineuse, la deuxième extrémité de la deuxième desdites fibres optiques étant disposée en regard du détecteur de lumière, un conduit tubulaire étant ménagé dans chacune des deux dites premières parois et débouche à l'intérieur de ladite zone de détection des impuretés, chaque conduit tubulaire recevant l'une desdites fibres optiques qui y est ajustée de manière étanche et la tranche de la première extrémité de chaque fibre optique étant sensiblement contenue dans le plan de la face interne de la première paroi, dans le conduit tubulaire de laquelle est reçue ladite fibre optique.

Selon l'invention,
- la zone de détection est délimitée par les deux dites premières parois et par une troisième paroi qui relie lesdites premières parois en étant décalée par rapport à la ligne joignant les premières extrémités des fibres optiques, cependant qu'un aimant permanent, fixé dans ladite troisième paroi, a l'un de ses pôles adjacent à ladite zone de détection ;

Les avantageuses dispositions suivantes sont, en outre, de préférence adoptées :
- la troisième paroi comporte un logement qui débouche dans la zone de détection et qui contient au moins partiellement ledit aimant permanent, dont ledit pôle est contenu dans ladite zone de détection elle-même ;
- l'aimant permanent est supporté par un bouchon vissé dans la troisième paroi, un joint d'étanchéité étant interposé entre le bouchon et la troisième paroi. L'invention a également pour objet un circuit hydraulique faisant application de deux détecteurs d'impuretés tels que précédemment définis.

Selon l'invention, ce circuit hydraulique comprend : un circuit d'utilisation d'un fluide hydraulique ; un premier desdits détecteurs d'impuretés, qui est raccordé audit circuit d'utilisation ; un conduit d'alimentation en fluide hydraulique dudit circuit d'utilisation ; le deuxième desdits détecteurs d'impuretés, qui est raccordé audit conduit d'alimentation ; et, un dispositif différentiel de mesure du taux d'impureté, auquel sont reliées les deuxièmes extrémités des deuxièmes fibres optiques desdits premier et deuxième détecteurs d'impuretés, et qui réalise la différence des excitations lumineuses provenant desdites deuxièmes extrémités des deuxièmes fibres optiques.

Les avantages principaux de l'invention sont ceux correspondant à une détection optique utilisant des fibres optiques, la lecture et l'exploitation de la détection à distance sont réalisées simplement grâce à la transmission par fibres optiques.

L'invention sera mieux comprise, et des caractéristiques secondaires et leurs avantages apparaîtront au cours de la description de réalisations donnée ci-dessous.

Il sera fait référence aux dessins annexés, dans lesquels:
- la figure 1 est une coupe d'un détecteur selon une première réalisation conforme à l'invention ;
- la figure 2 est une coupe d'un détecteur selon une deuxième réalisation conforme à l'invention ; et,
- la figure 3 est une représentation schématique d'un circuit hydraulique utilisant deux détecteurs d'impuretés conformes à l'invention.

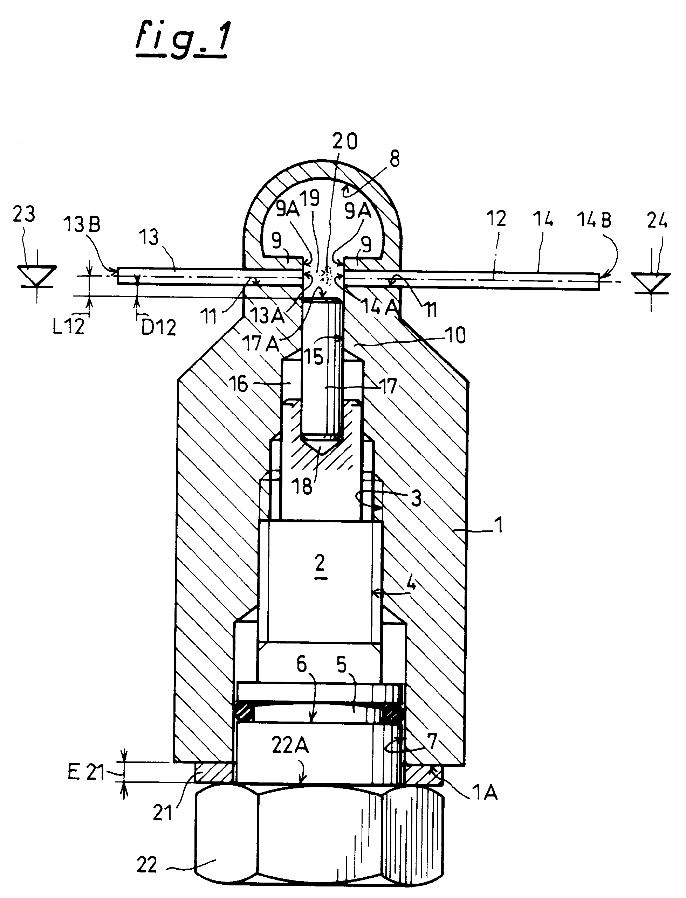

En regard de la figure 1 est représenté un détecteur d'impuretés constitué par :
- le corps 1 de réception d'une vis 2 qui comporte un taraudage 3 coopérant avec un filetage 4 de ladite vis pour la fixation de celle-ci sur ledit corps ;
- un joint d'étanchéité 5, contenu dans une gorge 6 de la vis 2, interposé entre un alésage 7 que comporte le corps 1 et ladite vis 2 ;
- une canalisation 8, dont est solidaire le corps 1 au moyen de deux premières parois 9 se faisant face, une troisième paroi 10 reliant les deux premières parois 9, en s'étendant sensiblement perpendiculairement aux parois 9 ;
- deux conduits tubulaires 11, alignés (droite 12), débouchent dans la zone de détection 19 disposée entre les faces internes 9A des parois 9 ;
- deux fibres optiques 13,14 contenues et ajustées sans jeu, avec étanchéité, l'une 13 dans l'un des conduits 11, l'autre 14 dans l'autre conduit 11, et ayant la tranche 13A,14A d'une première de leurs extrémités contenue dans la face 9A de la paroi 9 correspondante ;
- un alésage 15, ménagé dans la troisième paroi 10, la traversant, et reliant l'enceinte 16 intérieure au corps 1 à la zone de détection 19 qui communique en permanence avec la canalisation 8 appartenant à un circuit hydraulique contenant un fluide de lubrification ;
- un aimant permanent 17, cylindrique, a une première de ses extrémités introduite en force et maintenue dans une cavité 18 d'extrémité de la vis 2 formant bouchon, cependant que sa deuxième extrémité est contenue dans l'alésage 15, y est adaptée pratiquement sans jeu, et a sa tranche extrême 17A, constituant l'un des pôles de l'aimant, distante de l'axe 12 des conduits 11 d'une longueur L12 et de la plus proche des génératrices desdits conduits 12 d'une longueur D12, de sorte que la zone de détection 19 constitue, pour la canalisation 8, un puits de décantation des impuretés 20. Celles de ces impuretés qui sont métalliques sont en outre attirées dans ladite zone de détection 19 par le pôle 17A de l'aimant permanent 17.

Une rondelle 21, dont l'épaisseur E21 est choisie afin de régler la distance L12, est intercalée entre la face externe 1A du corps 1 et la face d'appui (de serrage) 22A de la tête 22 de la vis 2.

Par ailleurs, une source lumineuse 23 est placée en regard de la deuxième extrémité 13B de la fibre optique 13, un dispositif 24 de détection de la lumière étant placé en regard de la deuxième extrémité 14B de la fibre optique 14. Les propriétés des fibres optiques de transmission de la lumière permettent en outre de reporter, si cela est nécessaire, les sources de lumière 23 et dispositif 24 en des emplacements éloignés du corps 1, tels que par exemple peuvent l'être des écrans de surveillance de postes de pilotage d'avions ou d'automobiles, par rapport aux circuits de lubrification dont sont munis lesdits avions et automobiles.

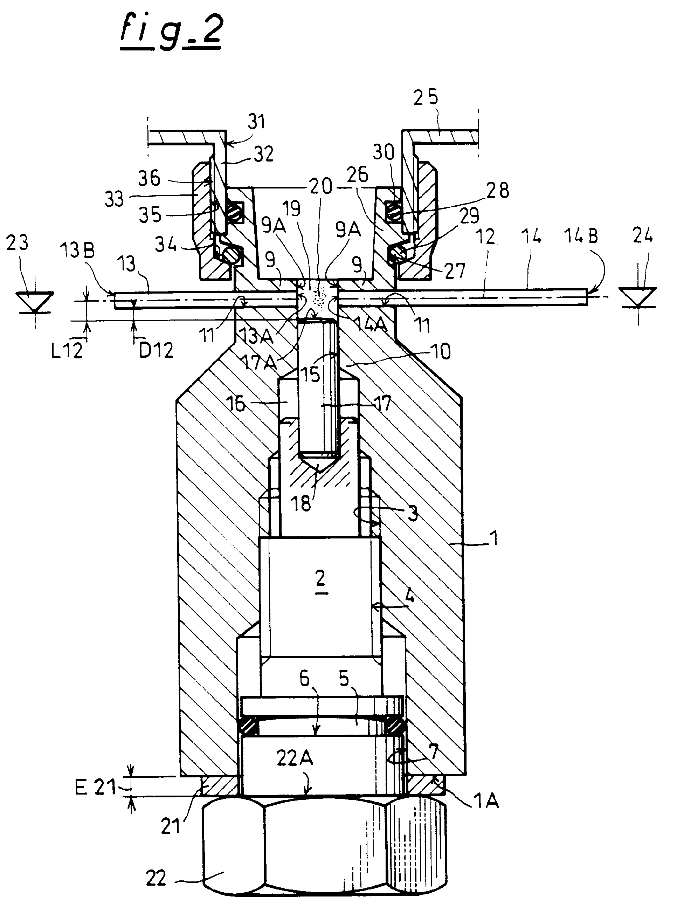

La figure 2 représente un ensemble identique à celui de la figure 1 sauf en ce qui concerne la disposition définie ci-après. La zone de détection 19 est cette fois en communication, non pas avec une canalisation 8, mais avec le carter d'huile 25 d'un moteur. Pour ce faire, le corps 1 comporte, au-delà des conduits tubulaires 11 par rapport au logement de la vis 2, un manchon de fixation 26, muni de deux gorges extérieures successives 27,28 recevant, l'une, 26, un jonc métallique 29, l'autre, 28, un joint d'étanchéité 30 disposé entre cette gorge 28 et un alésage 31 que comporte un manchon de fixation 32 du carter 25. Un fourreau de liaison 33, comportant un épaulement 34 et un taraudage 35 assure la fixation du corps 1 sur le carter 25 par coopération, d'une part, du taraudage 35 avec un filetage 36, que comporte le manchon de fixation 32 du carter 25, d'autre part, de l'épaulement 34 qui vient en appui sur le jonc 29.

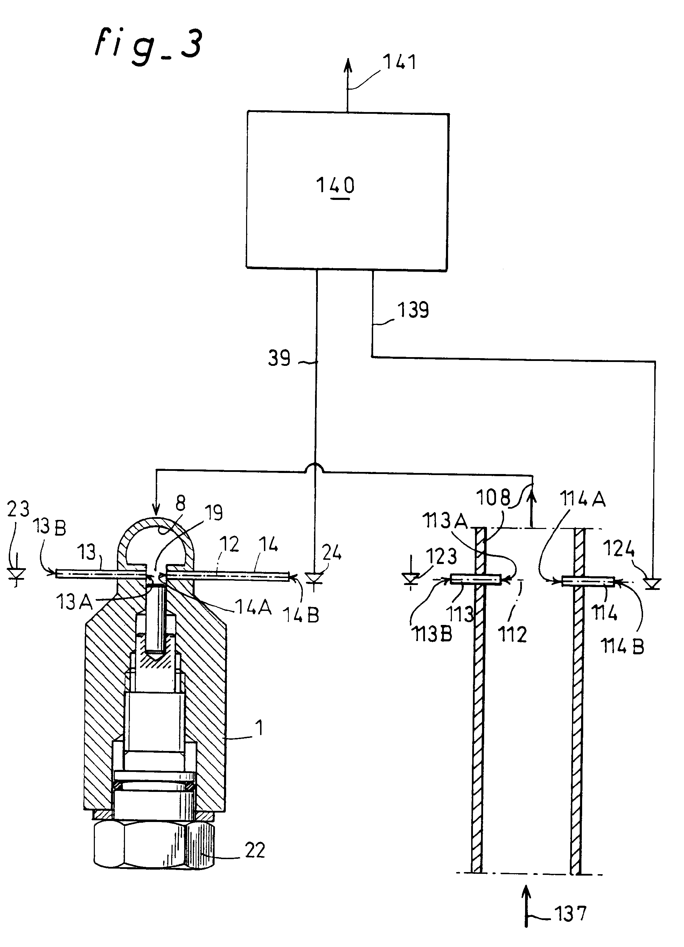

Le circuit représenté sur la figure 3 comprend un circuit d'utilisation auquel est raccordé le détecteur de la figure 1, et qui est matérialisé par la canalisation 8 dudit détecteur d'impuretés, contenant un fluide hydraulique ayant travaillé dans le circuit d'utilisation et chargé d'impuretés.

Un conduit 108 d'alimentation en fluide hydraulique épuré est raccordé d'une part, par un conduit 137 à un réservoir contenant ou à une pompe véhiculant le fluide épuré, d'autre part à l'admission du circuit d'utilisation. Un détecteur d'impuretés, analogue à ceux déjà décrits, est branché sur le conduit d'alimentation 108 et comporte, schématiquement, deux fibres optiques 113,114, alignées (112) ; dont les tranches 113A,114A de premières extrémités de chacune d'elles sont disposées en regard l'une de l'autre ; et dont les deuxièmes extrémités 113B,114B sont placées, respectivement, en regard d'une source lumineuse 123 et d'un dispositif de détection de la lumière 124. Des liaisons 39,139 relient les détecteurs de lumière 24 et 124 aux entrées d'un dispositif différentiel 140 de mesure du taux d'impuretés des fluides, ce dispositif différentiel 140 réalisant la différence 141 des excitations lumineuses provenant des deuxièmes extrémités 14B,114B des fibres optiques 14,114 et reçues par les dispositifs de détection de la lumière, 24,124.

Le fonctionnement des détecteurs d'impuretés décrits est indiqué ci-après en référence à la réalisation de la figure 1, le remplacement, dans la réalisation de la figure 2, de la canalisation 8 par le carter 25 n'ayant évidemment aucune influence sur la détection des impuretés 20.

Lorsque le fluide contenu dans la canalisation 8 ne contient pas d'impuretés, sa transparence n'affaiblit pas ou peu le signal lumineux qui est émis par la source de lumière 23 et véhiculé par la fibre optique 13, et qui est donc reçu par l'extrémité 14A de la fibre optique 14, véhiculé par celle-ci, et finalement reçu par le détecteur de lumière 24.

L'intensité du signal reçu par le détecteur de lumière 24 permet effectivement de constater la pureté du fluide.

Lorsque le fluide contient par contre des impuretés 20, celles-ci, souvent principalement métalliques, sont attirées et retenues dans la zone de détection 19 par le pôle 17A de l'aimant 17. le signal lumineux, qui parvient à l'extrémité 13A de la fibre optique 13 est transmis à l'extrémité 14A de la fibre optique 14 avec affaiblissement, de sorte que le détecteur de lumière 24 reçoit un signal affaibli, ce qui permet de constater la présence d'impuretés 20 dans la zone de détection 19 et donc dans le fluide contrôlé.

Il peut être fixé un seuil déterminé d'affaiblissement du signal lumineux détecté par le détecteur de lumière 24 au-delà duquel il devient nécessaire, soit de changer le filtre que comporte toute installation utilisant un fluide de lubrification, soit de remplacer ce fluide impur par un fluide neuf.

Il convient de faire les observations suivantes :
- l'épaisseur E21 de la rondelle 21 permet de choisir simplement la profondeur de la zone de détection 19, ou encore de régler aux valeurs désirées soit la longueur L 12, soit la longueur D12 séparant le pôle magnétique 17A des fibres optiques 13,14 ;
- les réalisations représentées montrent des conduits tubulaires 11 qui débouchent dans la zone de détection 19, les extrémités 13A, 14A des fibres optiques étant contenues dans le plan des faces internes 9A des parois 9. Il serait également conforme à l'invention d'obturer l'orifice par lequel chaque conduit tubulaire 11 débouche dans la zone de détection 19 par un corps transparent (verre, glace, ou analogue), et de placer les extrémités 13A,14A des fibres optiques en retrait par rapport auxdites faces internes 9A. Dans ce cas, chaque fibre optique 13,14 pourrait ne pas être ajustée avec étanchéité à chaque conduit tubulaire 11 ;
- le dispositif de détection 24 peut être combiné à un dispositif d'alarme avertissant l'utilisateur du dépassement du taux maximal admissible des impuretés contenues dans le fluide ;
- lorsque les impuretés 20 susceptibles d'être contenues dans le fluide ne sont pas métalliques, la présence de l'aimant 17 n'est pas nécessaire : le système de détection des impuretés contenues dans la zone de détection 19 reste efficace et le dispositif de détection de lumière 24 permet encore la surveillance de la pureté du fluide ;
- la transmission de signaux lumineux par fibres optiques permet, comme cela a déjà été noté, de reporter l'emplacement d'observation loin de la canalisation 8 ou du carter 25;
- le niveau d'alarme est réglable ;
- la surveillance peut être permanente ;
- la détection des impuretés est insensible aux perturbations, généralement gênantes pour les détections conformes à l'art antérieur, notamment aux perturbations magnétiques et nucléaires.

Le dispositif différentiel 140 de la figure 3 reçoit les informations correspondant aux mesures de l'énergie lumineuse transmise provenant des sources lumineuses 23,123, aux dispositifs de détection de la lumière 24,124, respectivement et réalise la différence de ces mesures. Autrement dit, ce dispositif différentiel tient compte de l'opacité du fluide hydraulique propre, épuré, et la déduit de celle du fluide ayant travaillé, la différence 141 des excitations lumineuses correspondant alors uniquement à l'atténuation de transmission provoquée par les seules impuretés, la déduction ayant été effectuée de l'atténuation de transmission lumineuse provoquée déjà par le fluide hydraulique épuré lui-même.

## Revendications

1. Détecteur des impuretés éventuellement contenues dans un fluide contenu dans une enceinte (8), ladite enceinte (8) comprenant une zone (19) de détection desdites impuretés (20) dans laquelle est disposée une tête de détection (14A) que comporte ledit détecteur, la zone de détection (19) ayant deux premières parois (9) disposées en regard l'une de l'autre, le détecteur d'impuretés ayant deux fibres optiques (13,14), une source lumineuse (23) et un détecteur de lumière (24), une première extrémité (13A, 14A) de chacune desdites fibres optiques (13,14) ayant un accès optique de l'intérieur de la zone de détection (19), les deuxdites fibres optiques (13,14) étant alignées (12) dans la zone de leurs premières extrémités, qui sont supportées par lesdites premières parois, la deuxième extrémité (13B) d'une première (13) desdites fibres optiques (13,14) étant disposée en regard de la source lumineuse (23), la deuxième extrémité (14B) de la deuxième (14) desdites fibres optiques étant disposée en regard du détecteur de lumière (24), un conduit tubulaire (11) étant ménagé dans chacune des deux dites premières parois (9) et débouchant à l'intérieur de ladite zone (19) de détection des impuretés, chaque conduit tubulaire (11) recevant l'une (13,14) desdites fibres optique qui y est ajustée de manière étanche, et, la tranche (13A,14a) de la première extrémité de chaque fibre optique (13,14) étant sensiblement contenue dans le plan de la face interne (9A) de la première paroi (9), dans le conduit tubulaire de laquelle est reçue ladite fibre optique, la zone de détection (19) étant délimitée par les deux dites premières parois (9) et par une troisième paroi (10) qui relie lesdites premières parois en étant décalée par rapport à la ligne (12) joignant les premières extrémités (13A,14A) des fibres optiques, cependant qu'un aimant permanent (17), fixé dans ladite troisième paroi (10), a l'un (17A) de ses pôles adjacent à ladite zone de détection (19).

2. Détecteur d'impuretés selon la revendication 1, caractérisé en ce que la troisième paroi (10) comporte un logement (15) qui débouche dans la zone de détection (19) et qui contient au moins partiellement ledit aimant permanent (17), dont ledit pôle (17A) est contenu dans ladite zone de détection elle-même.

3. Détecteur d'impuretés selon l'une quelconque des revendications 1 ou 2 , caractérisé en ce que l'aimant permanent (17) est supporté par un bouchon (2) vissé (4) dans la troisième paroi, un joint d'étanchéité (5) étant interposé entre le bouchon (2) et la troisième paroi.

4. Circuit hydraulique faisant application de deux détecteurs d'impuretés selon l'une quelconque des revendications 1 à 3, caractérisé en ce qu'il comprend :
- un circuit (8) d'utilisation d'un fluide hydraulique ;
- un premier (1) desdits détecteurs d'impuretés, qui est raccordé audit circuit d'utilisation ;
- un conduit (108) d'alimentation en fluide hydraulique dudit circuit d'utilisation ;
- le deuxième (113-114) desdits détecteurs d'impuretés, qui est raccordé audit conduit d'alimentation ; et,
- un dispositif différentiel (140) de mesure du taux d'impureté, auquel sont reliées (39,139) les deuxièmes extrémités (14B,114B) des deuxièmes fibres optiques desdits premier et deuxième détecteurs d'impuretés, et qui réalise la différence (141) des excitations lumineuses provenant desdites deuxièmes extrémités des deuxièmes fibres optiques.

## Patentansprüche

1. Sensor für Verunreinigungen, die eventuell in einem Fluidum vorhanden sind, das sich in einem Behälter (8) befindet, wobei der genannte Behälter (8) eine Zone (19) zur Erkennung der genannten Verunreinigungen (20) umfaßt, in der ein Sensorkopf (14A) angeordnet ist, der den genannten Sensor enthält, wobei die Erkennungszone (19) zwei erste Wände (9) hat, die einander gegenüber angeordnet sind, wobei der Sensor für Verunreinigungen zwei Lichtleitfasern (13, 14), eine Lichtquelle (23) und einen Lichtsensor (24) aufweist, wobei ein erstes Ende (13A, 14A) jeder der genannten Lichtleitfasern (13, 14) einen Lichtzugang vom Inneren der Erkennungszone (19) hat, wobei die beiden genannten Lichtleitfasern (13, 14) im Bereich ihrer ersten Enden, die von den genannten ersten Wänden gehalten werden, in einer Linie ausgerichtet sind (12), wobei das zweite Ende (13B) einer ersten (13) der genannten Lichtleitfasern (13, 14) gegenüber der Lichtquelle (23) angeordnet ist, wobei das zweite Ende (14B) der zweiten (14) der genannten Lichtleitfasern gegenüber dem Lichtsensor (24) angeordnet ist, wobei eine rohrförmige Leitung (11) in jeder der genannten ersten Wände (9) ausgeführt ist und im Inneren der genannten Zone (19) zur Erkennung der Verunreinigungen mündet, wobei jede rohrförmige Leitung (11) eine (13, 14) der genannten Lichtleitfasern aufnimmt, die dort in abgedichteter Weise eingerichtet ist, und wobei - da sich der Abschnitt (13A, 14A) des ersten Endes jeder Lichtleitfaser (13, 14) im wesentlichen in der Ebene der Innenseite (9A) der ersten Wand (9) befindet, in deren rohrförmiger Leitung die genannte Lichtleitfaser Aufnahme findet - die Erkennungszone (19) von den beiden genannten ersten Wänden (9) sowie von einer dritten Wand (10) abgegrenzt wird, die die genannten ersten Wände miteinander verbindet, indem sie in Bezug zu der Linie (12) verschoben ist, die die ersten Enden (13A, 14A) der Lichtleitfasern verbindet, während ein Dauermagnet (17), der in der genannten dritten Wand (10) befestigt ist, mit einem (17A) seiner Pole an die genannte Erkennungszone (19) angrenzt.

2. Sensor für Verunreinigungen nach Anspruch 1,
dadurch gekennzeichnet,
daß die dritte Wand (10) eine Aufnahme (15) aufweist, die in die Erkennungszone (19) mündet und wenigstens zum Teil den genannten Dauermagnet (17) aufnimmt, dessen genannter Pol (17A) sich in der genannten Erkennungszone selbst befindet.

3. Sensor für Verunreinigungen nach einem der Ansprüche 1 oder 2, dadurch gekennzeichnet, daß der Dauermagnet (17) von einem in die dritte Wand geschraubten (4) Verschluß (2) gehalten wird, wobei eine Dichtung (5) zwischen dem Verschluß (2) und der dritten Wand angeordnet ist.

4. Hydraulikkreis, in dem zwei Sensoren für Verunreinigungen nach einem der Ansprüche 1 bis 3 angewendet werden, dadurch gekennzeichnet, daß er beinhaltet:
- einen Verbraucherkreis (8) mit einem hydraulischen Fluidum,
- einen ersten (1) der genannten Sensoren für Verunreinigungen, der mit dem genannten Verbraucherkreis verbunden ist,
- eine Leitung (108) zur Versorgung des genannten Verbraucherkreises mit einem hydraulischen Fluidum,
- den zweiten (113 - 114) der genannten Sensoren für Verunreinigungen, der mit der genannten Versorgungsleitung verbunden ist, und
- eine differenzierende Vorrichtung (140) zur Messung des Verunreinigungsgrades, mit denen die zweiten Enden (14B, 114B) der zweiten Lichtleitfasern des genannten ersten und zweiten Sensors für Verunreinigungen verbunden sind, und die die Differenzen (141) der Lichtreize erkennt, die aus den genannten zweiten Enden der zweiten Lichtleitfasern stammen.

## Claims

1. Detector of impurities possibly contained in a fluid contained in a chamber (8), the said chamber (8) comprising a zone (19) for detecting the said impurities (20), in which zone is arranged a detection head (14A) which the said detector possesses, the detection zone (19) having two first walls (9) arranged opposite each other, the impurity detector having two optical fibres (13,14), a light source (23) and a light detector (24), a first end (13A, 14A) of each of the said optical fibres (13,14) having optical access from inside the detection zone (19), the two said optical fibres (13,14) being aligned (12) in the zone of their first ends, which are supported by the said first walls, the second end (13B) of a first one (13) of the said optical fibres (13,14) being arranged opposite the light source (23), the second end (14B) of the second one (14) of the said optical fibres being arranged opposite the light detector (24), a tubular conduit (11) being provided in each of the two said first walls (9) and emerging inside the said zone (19) for detecting the impurities, each tubular conduit (11) receiving one (13,14) of the said optical fibres which is fitted in a sealed manner therein, and the endface (13A,14A) of the first end of each optical fibre (13,14) being substantially contained in the plane of the inner face (9A) of the first wall (9) in the tubular conduit of which the said optical fibre is received, the detection zone (19) being delimited by the two said first walls (9) and by a third wall (10) which connects the said first walls, this being offset with respect to the line (12) joining the first ends (13A,14A) of the optical fibres, while a permanent magnet (17), fixed in the said third wall (10), has one (17A) of its poles adjacent to the said detection zone (19).

2. Impurity detector according to Claim 1, characterized in that the third wall (10) includes a housing (15) which emerges into the detection zone (19) and which contains, at least partially, the said permanent magnet (17), the said pole (17A) of which is contained in the said detection zone itself.

3. Impurity detector according to either of Claims 1 and 2, characterized in that the permanent magnet (17) is supported by a plug (2) screwed (4) into the third wall, a seal (5) being interposed between the plug (2) and the third wall.

4. Hydraulic circuit making use of two impurity detectors according to any one of Claims 1 to 3, characterized in that it comprises:
- a circuit (8) for using a hydraulic fluid;
- a first one (1) of the said impurity detectors, which is connected up to the said use circuit;
- a hydraulic-fluid feed pipe (108) for the said use circuit;
- the second one (113-114) of the said impurity detectors, which is connected up to the said feed pipe; and,
- a differential device (140) for measuring the impurity content, to which device are connected (39,139) the second ends (14B,114B) of the second optical fibres of the said first and second impurity detectors, and which produces the difference (141) in the luminous excitations coming from the said second ends of the second optical fibres.
